# EUROPÄISCHE PATENTSCHRIFT

(11) **EP 0 992 823 B1**
(45) Veröffentlichungstag und Bekanntmachung des Hinweises auf die Patenterteilung: **26.11.2003**
(21) Anmeldenummer: 99119281.6
(22) Anmeldetag: 28.09.1999
(51) Int. Cl.: G02B 6/42

(54) **Verfahren zur Justage eines optoelektronischen Bauelements**
Method for aligning an electrooptical component
Procédé de réglage d'un élément électrooptique

(30) Priorität: 29.09.1998 DE 19844701
(43) Veröffentlichungstag der Anmeldung: 12.04.2000
(73) Patentinhaber: Infineon Technologies AG, 81669 München (DE)
(72) Erfinder: Krug, Joachim, 85080 Gaimersheim (DE); Reill, Joachim, 93197 Zeitlarn (DE)
(74) Vertreter: Graf Lambsdorff, Matthias, Dr.

(56) Entgegenhaltungen:
- DE-A- 4 140 434
- US-A- 5 500 911
- PATENT ABSTRACTS OF JAPAN vol. 006, no. 133 (P-129), 20. Juli 1982 (1982-07-20) & JP 57 058115 A (TOSHIBA CORP), 7. April 1982 (1982-04-07)

## Beschreibung

Die Erfindung betrifft ein Verfahren zur Justage eines optoelektronischen Bauelements, das eine Lichtsender- und/oder Lichtempfängereinheit und eine Anschlußeinheit zum Ankoppeln eines Lichtwellenleiters umfaßt.

Ein Bauelement dieser Art ist beispielsweise in der nachveröffentlichten deutschen Patentanmeldung 198 23 691.3 beschrieben.

Derartige faseroptische Bauelemente werden typischerweise als Sende- oder Empfangsmodule für optische Übertragungsstrecken bei Telekommunikations- oder Datenkommunikationsanwendungen eingesetzt. Der zweikomponentige Aufbau des Bauelements aus Lichtsender-/Lichtempfängereinheit und Anschlußeinheit (auch Receptacle genannt) hat sich dabei u.a. aufgrund seiner einfachen Aufbauweise und Modularität als günstig erwiesen. Schwierigkeiten kann jedoch die erforderliche gegenseitige Ausrichtung bzw. Justage der beiden Einheiten bereiten.

In der Druckschrift US 5,500,911 ist ein Verfahren zur Ausrichtung einer optischen Faser gegenüber einem optischen Sender beschrieben. Der optische Sender ist an einem ersten Ende eines rohrförmigen Faseranschlusses angeordnet. Am anderen Ende weist der Faseranschluß eine Schrägbohrung auf, in welche eine optische Faser mit einem endseitig angeordneten zylindrischen Faserträger eingesetzt wird. Der Faserträger weist stirnseitig eine Linse auf. Die Justage zwischen dem Sender und der Faser erfolgt durch eine Verschiebung des Faserträgers in der Schrägbohrung und durch eine Bewegung des Faseranschlusses orthogonal zur optischen Achse.

In den Patent Abstracts of Japan, JP 57 058115, ist eine aus zwei Teilen bestehende Baugruppe zur Ankopplung einer Faser an ein optisch aktives Element beschrieben. Das optisch aktive Element befindet sich in dem unteren Teil der Baugruppe, der Faseranschluß ist in dem oberen Teil der Baugruppe integriert. Die Justage zwischen der Faser und dem optisch aktiven Element erfolgt durch eine Verschiebung der Faser in dem Faseranschluß und eine Verschiebung der beiden Baugruppenteile gegeneinander.

Der Erfindung liegt die Aufgabe zugrunde, ein einfach durchführbares Verfahren zur genauen Justage eines optoelektronischen Bauelements mit einer Lichtsender-/Lichtempfängereinheit und einer zur Ankopplung eines Lichtwellenleiters vorgesehenen Anschlußeinheit anzugeben.

Zur Lösung der Aufgabe sind die Merkmale der Patentansprüche 1 und 2 vorgesehen.

Der durch die Zweiteiligkeit der Anschlußeinheit ermöglichte Justageablauf vollzieht sich erfindungsgemäß in zwei getrennten Justageschritten (Schritte c und e bzw. C und E) und ermöglicht, den Lichtsender/Lichtempfänger an den Lichtwellenleiter sowohl in Hinblick auf eine gewünschte Strahlenganggeometrie als auch in Hinblick auf eine gewünschte Fokalbedingung des umgelenkten Lichtbündels anzupassen. Bei dem ersten Schritt c, C wird durch ein einfaches Verschieben des ersten Teils gegenüber der Lichtsender-/Lichtempfängereinheit in einer konstruktiv vorgegebenen Bezugsebene erreicht, daß das umgelenkte Lichtbündel - im Falle einer Lichtsendereinheit - im wesentlichen mittig auf eine Stirnfläche des Lichtwellenleiters auftrifft, bzw. - im Falle einer Lichtempfängereinheit - im wesentlichen mittig auf eine Öffnungsquerschnittsfläche des Empfängers fällt. Durch die mittige Einkopplung des umgelenkten Lichtbündels entweder in den Lichtwellenleiter oder in den Empfänger werden unerwünschte, durch ungenügende Strahlengangausrichtung herbeigeführte Anpassungsverluste so klein wie möglich gehalten.

Der zweite Justageschritt e bzw. E, ausgeführt durch eine in der zweiten Richtung (Strahlrichtung) erfolgende Verschiebung des zweiten Teils gegenüber dem ersten Teil, gestattet die Einstellung einer gewünschten Fokalbedingung. Bei einer Lichtsendereinheit kann die gewünschte Fokalbedingung beispielsweise darin bestehen, daß die Bildebene der verwendeten Optik mit der Stirnfläche des Lichtwellenleiters zusammenfällt oder diese (bei einer gegenüber der x-Richtung geneigten Stirnfläche) diametral schneidet. Es sind jedoch auch andere Fokalbedingungen möglich und gegebenenfalls auch vorteilhaft. Beispielsweise kann die Lage der Bildebene relativ zu der Lage der Stirnfläche des Lichtwellenleiters so eingestellt sein, daß eine definiert vorgegebene Lichtfleckgröße auf der Stirnfläche des Lichtwellenleiters erzielt wird, wobei der Fokus des umgelenkten Lichtbündels außerhalb der Stirnfläche des Lichtwellenleiters liegen kann.

Wegen der Parallelität der zweiten Richtung und der Bezugsebene erfolgt auch der zweite Justageschritt in der Bezugsebene. Der Gesamtjustageablauf (erster und zweiter Schritt) ist daher zweiachsig und ist somit auf einfache Art und Weise realisierbar.

Im Falle der Verwendung einer Lichtempfängereinheit liegen vergleichbare Verhältnisse wie bei der Verwendung einer Lichtsendereinheit vor. Der zweite Justageschritt E ermöglicht dann beispielsweise die Fokussierung des umgelenkten Lichtbündels auf eine unter vorgegebener Lage angeordnete Öffnungsquerschnittsfläche des Empfängers.

Die Optik kann grundsätzlich an jeder Stelle zwischen dem Lichtsender/Lichtempfänger und dem Lichtwellenleiter angeordnet sein. Bei einer bevorzugten Ausführungsvariante des Verfahrens umfaßt die Optik eine im Strahlengang zwischen dem Umlenkspiegel und dem Lichtwellenleiter angeordnete Linse. Dabei kann die Größe und Position der Linse so gewählt sein, daß diese in der in dem ersten Justageschritt einjustierten Position dezentral von dem Strahlengang durchlaufen wird. Dadurch wird erreicht, daß ein von der Linse reflektierter Strahl nicht zu dem Lichtsender zurücklaufen und dort Störungen verursachen kann.

Bei einem für die Durchführung des erfindungsgemäßen Verfahrens geeignet ausgelegten optoelektronischen Bauelement ist das erste Teil in einer die erste Richtung schneidenden, konstruktiv vorgegebenen Bezugsebene bezüglich der Lichtsenderund/oder Lichtempfängereinheit verschieblich, wobei sich ein in den Lichtwellenleiter ein- und/oder austretendes Lichtbündel in einer zweiten Richtung (x) erstreckt, die im wesentlichen parallel zu der Bezugsebene ist, und das zweite Teil bezüglich dem ersten Teil (22) in der zweiten Richtung zu dem Umlenkspiegel hin oder von diesem weg verschieblich ist.

Ein einfacher Gesamtaufbau des optoelektronischen Bauelements ergibt sich, wenn die Bezugsebene durch eine Deckenplatte eines die Lichtsender- und/oder Lichtempfängereinheit aufnehmenden Modulgehäuses realisiert wird.

Eine weitere vorteilhafte Ausführungsvariante kennzeichnet sich dadurch, daß das erste Teil eine sich in der vorgegebenen zweiten Richtung erstreckende Führungsfläche umfaßt, die in Gleitkontakt mit einer Gegenführungsfläche des zweiten Teils steht. Auf diese Weise kann der zweite Justageschritt durch ein Vergleiten der Gegenführungsfläche des zweiten Teils an der Führungsfläche des ersten Teils sehr präzise durchgeführt werden.

Vorzugsweise verläuft eine Zentralachse des Lichtwellenleiters oder einer in dem zweiten Teil zur Entgegennahme eines Fasersteckers des Lichtwellenleiters ausgebildeten Aufnahme unter einem Winkel α gegenüber der zweiten Richtung, und eine Stirnfläche des Lichtwellenleiters ist unter einem Winkel von 2α gegenüber einer Normalebene bezüglich der Zentralachse geneigt. Dadurch wird einerseits vermieden, daß an der Stirnfläche des Lichtwellenleiters zurückgeworfenes Licht in den Lichtsender (der entweder in dem optoelektronischen Bauelement selbst oder, falls dieses eine Lichtempfängereinheit darstellt, als ein externer Lichtsender realisiert ist) zurückgelangt, und andererseits wird durch die Abschrägung der Stirnfläche unter einem Winkel von 2α die gewünschte Abbiegung des Strahlengangs beim Ein-/Austritt aus dem Lichtwellenleiter unter einem Winkel α erreicht.

Weitere vorteilhafte Ausgestaltungen der Erfindung sind in den Unteransprüchen angegeben.

Die Erfindung wird nachfolgend anhand von Ausführungsbeispielen unter Bezugnahme auf die Zeichnung in beispielhafter Weise beschrieben; in dieser zeigt:
- Fig. 1: eine schematische Schnittdarstellung eines einen Lichtsender enthaltenden optoelektronischen Bauelements;
- Fig. 2: eine schematische Schnittdarstellung eines einen Lichtempfänger enthaltenden optoelektronischen Bauelements; und
- Fig. 3: eine schematische Schnittdarstellung eines weiteren, einen Lichtsender enthaltenden optoelektronischen Bauelements mit einer Linse im Strahlengang zwischen einem Umlenkspiegel und einem Faserstecker.

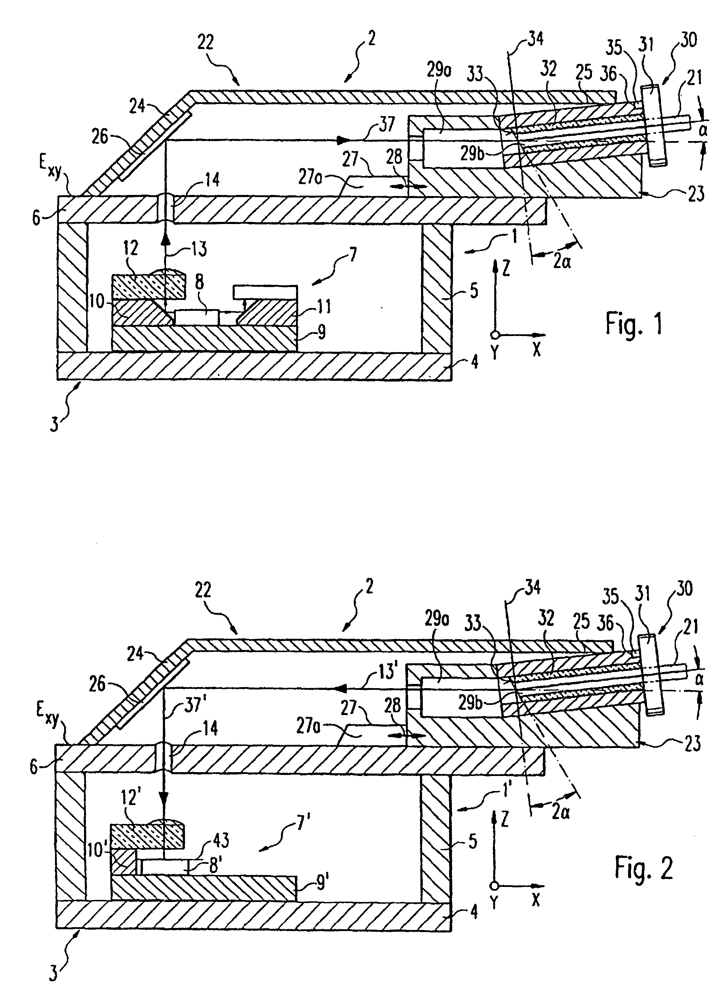

Fig. 1 zeigt ein optoelektronisches Lichtsender-Bauelement, das aus einer Lichtsendereinheit 1 und einer Anschlußeinheit (Receptacle) 2 aufgebaut ist.

Die Lichtsendereinheit 1 weist ein Modulgehäuse 3 auf, das aus einer Bodenplatte 4, einer Umfangswand 5 und einer Dekkenplatte 6 besteht. Die Bodenplatte 4, die Umfangswand 5 und die Deckenplatte 6 können beispielsweise aus Metall gefertigt sein.

In dem Modulgehäuse 3 ist ein Lasermodul 7 untergebracht. Das Lasermodul 7 verwendet einen Laserchip 8, der auf einem aus Silizium bestehenden Träger 9 angeordnet ist. Der Träger 9 trägt ferner zwei Umlenkprismen 10, 11, die zu beiden Seiten des Laserchips 8 angeordnet sind und Spiegelflächen aufweisen, die unter einem Winkel von 45° gegenüber der aktiven Zone des Laserchips 8 orientiert sind. Auf dem einen Umlenkprisma 10 ist eine Koppellinse 12 aufgebracht und so angeordnet, daß ein im Laserchip 8 erzeugtes und von dem Umlenkprisma 10 umgelenktes Lichtbündel 13 die Koppellinse 12 im wesentlichen koaxial durchläuft und durch eine Austrittsöffnung 14 in der Deckenplatte 6 aus dem Modulgehäuse 3 austritt.

Die Richtung des durch die Durchtrittsöffnung 14 hindurchlaufenden Lichtbündels 13 definiert die z-Richtung.

Die Anschlußeinheit (Receptacle) 2 dient zur Ankopplung eines Lichtwellenleiters 21 an die Lichtsendereinheit 1. Sie besteht im wesentlichen aus einem ersten Teil 22 und einem zweiten Teil 23. Das erste Teil 22 ist haubenförmig ausgebildet und weist an seinem einen seitlichen Ende einen Schrägwandbereich 24 und an seinem anderen, gegenüberliegenden seitlichen Ende eine Öffnung 25 auf. An dem Schrägwandbereich 24 ist innenseitig ein Umlenkspiegel 26 angebracht.

Ferner weist das erste Teil 22 eine nach innen weisende Längskante 27 mit einer Führungsfläche 27a großer Ebenheit auf, an der das zweite Teil 23 mit einer in Fig. 1 nicht erkennbaren, ebenfalls sehr ebenflächig ausgebildeten Gegenführungsfläche in Art eines Schlittens in Richtung des Doppelpfeils 28 verschiebbar ist. Die Führungsfläche 27a erstreckt sich parallel zu einer Normalen des Umlenkspiegels 26.

Die Oberfläche der Deckenplatte 6 definiert eine Bezugsebene E_{xy}, die sich in dem dargestellten Beispiel senkrecht zu der z-Richtung erstreckt. Das erste Teil 22 ist auf der Deckenplatte 6, d.h. in der Bezugsebene E_{xy} verschiebbar.

Die Richtung des Doppelpfeils 28 (Verschiebungsrichtung des zweiten Teils 23 gegenüber dem ersten Teil 22) ist durch die Stoßlinie zwischen der Deckenplatte 6 und der Führungsfläche 27a der Längskante 27 des ersten Teils 22 vorgegeben.

Das zweite Teil 23 ist hohlförmig ausgebildet und weist eine Axialbohrung 29a sowie eine mit dieser in Verbindung stehende Schrägbohrung 29b auf. Die Schrägbohrung 29b ist unter einem spitzen Winkel α (beispielsweise α = **6°)** gegenüber der Axialbohrung geneigt.

Die Schrägbohrung 29b dient als Aufnahme für einen Faserstekker 30. Der Faserstecker 30 umfaßt einen Faserflansch 31, der lagefest an dem Lichtwellenleiter 21 angebracht ist, sowie eine Keramikhülse 32, die den Lichtwellenleiter 21 in einem Endbereich vor dem Faserflansch 31 umfangsseitig ummantelt. An seinem Faserflansch-seitigen Ende weist der Lichtwellenleiter 21 eine Stirnfläche 33 auf, die unter einem Winkel von 2α gegenüber einer Normalebene 34 bezüglich der Zentralachse der Schrägbohrung 29b geneigt ist.

Die Keramikhülse 32 ist maßgenau in die Schrägbohrung 29b eingepaßt, wobei die Endlage des Fasersteckers 30 in axialer Richtung durch den als Anschlag wirkenden Faserflansch 31 festgelegt ist. Der Faserflansch 31 kann ferner mit einem Eingriffszapfen 35 ausgestattet sein, der in eine komplementäre Ausnehmung 36 in dem zweiten Teil 23 eingreift und eine definierte Drehlage des Fasersteckers 30 in dem zweiten Teil 23 gewährleistet.

Das erfindungsgemäße Verfahren zur Justage des optoelektronischen Bauelements 1 kann folgendermaßen durchgeführt werden:

Bei Inbetriebnahme des Laserchips 8 emittiert dieser ein Lichtbündel 13, das, wie bereits angesprochen, die Koppellinse 12 durchläuft und von dieser unter einer vorgegebenen Bildweite W, definiert als der Abstand zwischen der Hauptebene der Koppellinse 12 und der Bildebene, fokussiert wird.

Die Justage der Anschlußeinheit (Receptacle) 2 vollzieht sich in zwei Schritten. Zunächst erfolgt eine Justage des ersten Teils 22 gegenüber der Lichtsendereinheit 1, wobei das gegenüber dem ersten Teil 22 vorjustierte zweite Teil 23 mit lagerichtig in die Schrägbohrung 29b eingesetztem Faserstecker 30 mit dem ersten Teil 22 mitgeführt wird. Das Mitführen kann beispielsweise durch eine geeignet ausgebildete, nicht dargestellte Manipulationsvorrichtung bewirkt werden. Das erste Teil 22 wird nun so auf der Deckenplatte 6 des Modulgehäuses 3 der Lichtsendereinheit 1 verschoben, daß das Lichtbündel 13 auf den Umlenkspiegel 26 trifft und diesen ein umgelenktes Lichtbündel 37 verläßt.

Im dargestellten Beispiel verläuft die Bezugsebene E_{xy} senkrecht zu der z-Richtung und der Umlenkspiegel 26 ist unter einem Winkel von 45° gegenüber dem einfallenden Lichtbündel 13 (z-Richtung) geneigt. Dies hat zur Folge, daß das umgelenkte Lichtbündel 37 unabhängig von der Position des ersten Teils 22 stets parallel zu der Bezugsebene E_{xy} verläuft. Die Richtung des umgelenkten Lichtbündels 37 wird im folgenden als x-Richtung bezeichnet.

Durch ein Verschieben des ersten Teils 22 in x-Richtung wird die Lage des ersten Teils 22 gegenüber dem Modulgehäuse 3 der Lichtsendereinheit 1 so eingestellt, daß das umgelenkte Lichtbündel 37 mittig in bezug auf eine Projektion der z-Richtung auf die Stirnfläche 33 des Lichtwellenleiters 21 auf diese auftrifft. Die optimale Lage kann anhand des Auftretens eines Intensitätsmaximums am Ausgang des Lichtwellenleiters 21 festgestellt werden.

Die y-Richtung ist als die Richtung definiert, die sowohl senkrecht auf der x-Richtung als auch senkrecht auf der z-Richtung steht. Durch eine Justage des ersten Teils 22 in y-Richtung wird erreicht, daß das umgelenkte Lichtbündel 37 auch in bezug auf die y-Richtung mittig auf die Stirnfläche 33 des Lichtwellenleiters 21 auftrifft.

Im Ergebnis wird durch den beschriebenen ersten Justageschritt des ersten Teils 22 in x- und y-Richtung eine genaue und endgültige Positionierung des umgelenkten Lichtbündels 37 auf die Mitte der Stirnfläche 33 des Lichtwellenleiters 21 herbeigeführt.

Nachfolgend wird das erste Teil 22 an der Deckenplatte 6 des Modulgehäuse 3 fixiert.

In einem zweiten Justageschritt wird eine Fokalbedingung des umgelenkten Lichtbündels 37 eingestellt. Beispielsweise soll das umgelenkte Lichtbündel 37 zur Erzielung einer guten Lichteinkopplung in den Lichtwellenleiter 21 auf die Stirnfläche 33 desselben fokussiert werden. Zu diesem Zweck wird das zweite Teil 23 in x-Richtung, (d.h. entlang der Richtung des umgelenkten Lichtbündels 37) soweit verschoben, bis die Bildebene der Koppellinse 12 mit der Stirnfläche 33 des Lichtwellenleiters 21 zusammenfällt bzw. bei Vorsehen einer angeschrägten Stirnfläche 33 diese axialmittig schneidet. Mit anderen Worten wird die Länge des Strahlengangs zwischen der optischen Hauptebene der Koppellinse 12 und dem Mittelpunkt der Stirnfläche 33 Lichtwellenleiters 21 so eingestellt, daß sie identisch mit der Bildweite W ist.

Die Verschiebung des zweiten Teils 23 erfolgt in dem dargestellten Beispiel sowohl entlang der Deckenplatte 6 als auch entlang der Führungsfläche 27a des ersten Teils 22. Da die Oberfläche der Deckenplatte 6 hier gerade die E_{xy} Bezugsebene repräsentiert (d.h. parallel zu der x-Richtung ist) und, wie bereits erwähnt, sich die Führungsfläche 27a parallel zu der Normalen der Umlenkspiegelfläche erstreckt, verläuft die Stoßlinie zwischen der Führungsfläche 27a und der Oberfläche der Deckenplatte 6 gerade in x-Richtung. Somit ist sichergestellt, daß die entlang dieser Stoßlinie durchgeführte Verschiebung des zweiten Teils 23 (gemäß Doppelpfeil 28) tatsächlich in Richtung des umgelenkten Lichtbündels (x-Richtung) erfolgt. Dies gewährleistet, daß bei dem zweiten Justageschritt die im Rahmen des ersten Justageschritts eingestellte mittige Strahlzentrierung bezüglich der Stirnfläche 33 des Lichtwellenleiters 21 erhalten bleibt.

Wegen der Aufrechterhaltung der mittigen Strahlzentrierung kann auch bei dem zweiten Justageschritt die Einstellung der Lage des zweiten Teils 23 gegenüber dem ersten Teil 22 durch eine Überwachung und Maximierung der aus dem Lichtwellenleiter 21 ausgekoppelten Lichtintensität vorgenommen werden kann.

Die in dem zweiten Justageschritt in x-Richtung durchzuführende Verschiebung des zweiten Teils 23 muß nicht an einer entsprechend ausgerichteten Führungsfläche 27a des ersten Teils 22 erfolgen sondern kann konstruktiv auch in anderer Form realisiert werden.

Die Richtung des umgelenkten, in den Lichtwellenleiter eintretenden Lichtbündels 37 (x-Richtung) muß nicht senkrecht zu der Richtung des die Lichtsendereinheit 1 verlassenden Lichtbündels (z-Richtung) sein. Ferner kann die Bezugsebene E_{xy} auch in anderer Form als durch die Deckenplatte 6 des Modulgehäuses 3 der Lichtsendereinheit 1 definiert bzw. realisiert sein.

Nach dem Einstellen der im zweiten Justageschritt gefundenen Position wird das zweite Teil 23 bezüglich dem ersten Teil 22 beispielsweise durch Verlöten oder Verschweißen mit der Dekkenplatte 6 festgelegt. Die gewünschte optimale Ankopplung des Lichtwellenleiters 21 an die Lichtsendereinheit 1 ist nunmehr erreicht.

Das optoelektronische Bauelement 1, 2 kann beispielsweise in SMD-(Surface-Mounted Device-) Technik ausgeführt sein. Zur Montage des Bauelements 1, 2 auf eine nicht dargestellte Bestückungsoberfläche wird der Faserstecker 30 aus der Anschlußeinheit 2 entnommen, die Öffnung 25 abgedeckt und das optoelektronische Bauelement 1, 2 an die Bestückungsoberfläche angelötet. Danach wird der Faserstecker 30 wieder in die Schrägbohrung 29b eingesteckt und das Bauelement 1, 2 ist betriebsbereit.

Fig. 2 zeigt ein weiteres optoelektronisches Bauelement, das sich von dem in Fig. 1 gezeigten Bauelement im wesentlichen nur dadurch unterscheidet, daß anstelle der Lichtsendereinheit 1 eine Lichtempfängereinheit 1' vorgesehen ist. Vergleichbare Teile wie in Fig. 1 sind mit den gleichen Bezugszeichen gekennzeichnet.

Ein in dem Modulgehäuse 3 befindliches Empfängermodul 7' weist einen Träger 9' aus Silizium auf, der ein Abstandselement 10' sowie einen Photodetektor 8' trägt. Oberhalb des Abstandselements 10' ist eine Koppellinse 12' angeordnet.

Ein aus dem Lichtwellenleiter 21 austretendes Lichtbündel 13' wird an dem Umlenkspiegel 26 umgelenkt. Das umgelenkte Lichtbündel 37' tritt durch eine Öffnung 14 der Deckenplatte 6 in das Modulgehäuse 3 der Lichtempfängereinheit 1' ein.

Die Justage der Anschlußeinheit 2 gegenüber der Lichtempfängereinheit 1' erfolgt in Analogie zu dem anhand der Fig. 1 beschriebenen Verfahren. Der erste Justageschritt zur gezielten Ausrichtung des umgelenkten Lichtbündels 37' auf einen Mittelpunkt einer Öffnungsquerschnittfläche 43 des Photodetektors 8' erfolgt wiederum durch eine Verschiebung des ersten Teils 22 auf der die Bezugsebene E_{xy} definierenden Dekkenplatte 6 des Modulgehäuses 3 gegenüber der Lichtempfängereinheit 1'. Durch eine nachfolgende Verschiebung des zweiten Teils 23 gegenüber dem lagefixierten ersten Teil 22 wird dann in der bereits beschriebenen Weise eine Fokalbedingung im Hinblick auf die Lage der Bildebene der Koppellinse 12' relativ zu der Lage der Öffnungsquerschnittfläche 43 des Photodetektors 8' eingestellt.

Die beiden Justageschritte können mittels einer Überwachung eines Ausgangssignals des Photodetektors 8' kontrolliert und beispielsweise in Abhängigkeit von diesem Signal geregelt durchgeführt werden.

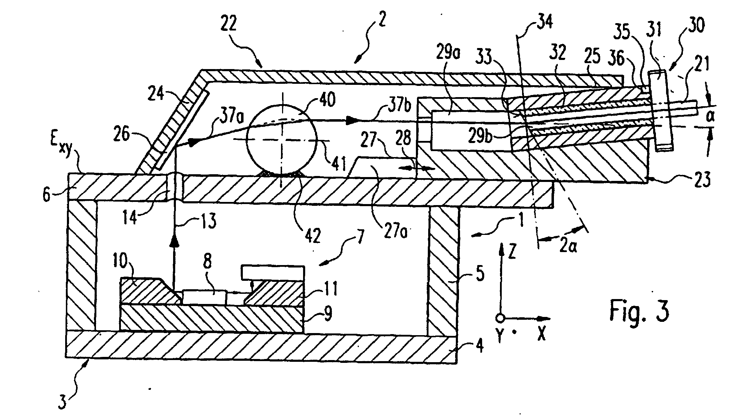

Fig. 3 zeigt ein weiteres Ausführungsbeispiel eines optoelektronischen Bauelements 1, 2, das sich von dem in Fig. 1 gezeigten Beispiel im wesentlichen dadurch unterscheidet, daß die Optik in Form einer Linse 40 nunmehr in der Anschlußeinheit 2 untergebracht ist. Wiederum sind vergleichbare Teile wie in Fig. 1 mit den identischen Bezugszeichen versehen.

Das von dem Laserchip 8 emittierte und an dem Umlenkprisma 10 umgelenkte Lichtbündel 13 trifft auf den Umlenkspiegel 26 auf und wird von diesem unter einem spitzen Winkel gegenüber der Bezugsebene E_{xy} als geneigtes Lichtbündel 37a reflektiert. Das geneigte Lichtbündel 37a trifft außerhalb der optischen Achse 41 und unter einem nicht senkrechten Winkel auf die Oberfläche der Linse 40 auf, was zur Folge hat, daß an der Oberfläche der Linse 40 reflektiertes Licht nicht in den Laserchip 8 zurücklaufen kann. Das geneigte Lichtbündel 37a wird dann in der Linse 40 gebrochen und tritt als in x-Richtung parallel zu der Bezugsebene E_{xy} verlaufendes Lichtbündel 37b aus der Linse 40 aus.

Die Linse 40 kann entweder beispielsweise mittels eines Klebers 42 an der Deckenplatte 6 des Modulgehäuses 3 angebracht oder.in nicht dargestellter Weise in einer an dem ersten Teil 22 angebrachten Einfassung montiert sein.

Die Einstellung der jeweiligen Justagelagen der beiden Teile 22 und 23 erfolgt analog zu der anhand Fig. 1 erläuterten Vorgehensweise. Allerdings ist es bei dem hier dargestellten Bauelement 1, 2 aufgrund der die Richtung des Strahlengangs beeinflussenden Linse 40 etwas schwieriger, sicherzustellen, daß das die Linse 40 in x-Richtung verlassende Lichtbündel 37b nach dem ersten Justageschritt in guter Näherung parallel zu der Bezugsebene E_{xy} verläuft, d.h. eine verschwindende z-Komponente hat.

Eine verschwindende z-Komponente des Lichtbündels 37b kann jedoch mit guter Genauigkeit erreicht werden, indem die Verkippung des Umlenkspiegels 26 gegenüber der Bezugsebene E_{xy} sowie die Größe, Position und Brechkraft der Linse 40 exakt aufeinander abgestimmt sind. Zwar kann infolge unvermeidlicher fertigungstechnischer Toleranzen das gelegentliche Auftreten leichter Abweichungen von dem idealen Verlauf des Lichtbündels 37b ohne z-Komponente (nach Durchführung des ersten Justageschrittes) auch in diesem Fall nicht vollständig ausgeschlossen werden. Derartige Abweichungen bewirken, daß sich während des zweiten Justageschritt (Einstellen der Fokalbedingung) der von dem Lichtbündel 37b auf der Stirnfläche 33 erzeugte Lichtfleck in unerwünschter Weise aus der Mitte der Stirnfläche 33 heraus verlagert. Dieser Effekt läßt sich dadurch reduzieren, daß das zweite Teil 23 vor der Ausführung des ersten Justageschrittes bereits mit möglichst hoher Genauigkeit in dem ersten Teil 22 vorpositioniert wird, so daß die bei dem zweiten Justageschritt ausführbaren Einstellwege klein bleiben. Je besser die Vorpositionierung ist, desto größere Fertigungstoleranzen können hingenommen werden. Durch eine geeignete Vorpositionierung können beispielsweise maximale Einstellwege im Bereich von wenigen 10 bis 100 µm realisiert werden.

Die in Fig. 3 dargestellte Lichtsendereinheit 1 kann in Analogie zu Fig. 2 durch eine Lichtempfängereinheit 1' ersetzt werden.

Sämtliche dargestellten Ausführungsbeispiele sind grundsätzlich vergleichbar und ermöglichen stets die Umsetzung einer dreiachsigen Justage eines optoelektronischen Bauelements in eine zweiachsige Justage in der Bezugsebene E_{xy}, bei der im Rahmen von zwei getrennt durchführbaren Justageschritten eine Richtung eines umgelenkten Lichtbündels und eine Fokaleigenschaft desselben weitgehend unabhängig voneinander eingestellt werden können.

## Patentansprüche

1. Verfahren zur Justage eines optoelektronischen Bauelements mit
- einer einen Lichtsender (8) enthaltenden Lichtsendereinheit (1), welche ein entlang einer ersten Richtung (z) verlaufendes Lichtbündel (13) aussendet,
- einer ein erstes (22) und ein zweites Teil (23) umfassenden Anschlußeinheit (2), wobei das erste Teil (22) einen Umlenkspiegel (26) aufweist und das zweite Teil (23) zur Halterung eines Lichtwellenleiters (21) vorgesehen ist und in bezug auf das erste Teil (22) zu dem Umlenkspiegel (26) hin oder von diesem weg verschieblich ist, und
- einer im Strahlengang zwischen dem Lichtsender (8) und dem zweiten Teil (23) angeordneten Optik (12, 40)
bei dem die Schritte durchgeführt werden:
a) Inbetriebnahme des Lichtsenders (8) ;
b) Einstellen einer Ausgangsrelativlage zwischen dem ersten (22) und dem zweiten (23) Teil;
c) unter Beibehaltung der Ausgangsrelativlage Justage des ersten Teils (22) gegenüber der Lichtsendereinheit (1) durch Verschieben des ersten Teils (22) in einer konstruktiv vorgegebenen, die erste Richtung (z) schneidenden Bezugsebene (E_{xy}), derart, daß das ausgesendete Lichtbündel (13) auf den Umlenkspiegel (26) fällt und diesen ein umgelenktes Lichtbündel (37, 37b) verläßt, welches unter einer zweiten Richtung (x), die im wesentlichen parallel zu der Bezugsebene (E_{xy}) verläuft, im wesentlichen mittig auf eine Stirnfläche (33) des Lichtwellenleiters (21) fällt;
d) Festlegen der Relativlage zwischen dem ersten Teil (22) und der Lichtsendereinheit (1) in der einjustierten Position;
e) Justage des zweiten Teils (23) gegenüber dem ersten Teil (22) durch Verschieben des zweiten Teils (23) in der zweiten Richtung (x) gegenüber dem ersten Teil (22), derart, daß eine vorgegebene Bedingung hinsichtlich der Lage der optischen Bildebene der Optik (12, 40) in bezug auf die Lage der Stirnfläche (33) des Lichtwellenleiters (21) erfüllt ist; und
f) Festlegen der Relativlage zwischen dem ersten Teil (22) und dem zweiten Teil (23) in der einjustierten Position.

2. Verfahren zur Justage eines optoelektronischen Bauelements mit
- einer einen Lichtempfänger (8') enthaltenden Lichtempfängereinheit (1'), welche ein entlang einer ersten Richtung (z) verlaufendes Lichtbündel (37') entgegennimmt,
- einer ein erstes (22) und ein zweites (23) Teil umfassenden Anschlußeinheit (2), wobei das erste Teil (22) einen Umlenkspiegel (26) aufweist und das zweite Teil (23) zur Halterung eines Lichtwellenleiters (21) vorgesehen ist und in bezug auf das erste Teil (22) zu dem Umlenkspiegel (26) hin oder von diesem weg verschieblich ist, und
- einer im Strahlengang zwischen dem Lichtempfänger (8') und dem zweiten Teil (23) angeordneten Optik (12', 40)
bei dem die Schritte durchgeführt werden:
A1) Inbetriebnahme eines mit dem Lichtwellenleiter (21) an dessen freiem Ende gekoppelten, externen Lichtsenders, wobei den Lichtwellenleiter (21) ein in einer zweiten Richtung (x) ausgesendetes Lichtbündel (13') werläßt;
A2) Inbetriebnahme des Lichtempfängers (8');
B) Einstellen einer Ausgangsrelativlage zwischen dem ersten (22) und dem zweiten (23) Teil;
C) unter Beibehaltung der Ausgangsrelativlage Justage des ersten Teils (22) gegenüber der Lichtempfängereinheit (1') durch Verschieben des ersten Teils in einer konstruktiv vorgegebenen, die erste Richtung (z) schneidenden und zu der zweiten Richtung im wesentlichen parallelen Bezugsebene (E_{xy}), derart, daß das ausgesendete Lichtbündel (13') auf den Umlenkspiegel (26) fällt und das umgelenkte, in der ersten Richtung (z) verlaufende Lichtbündel (37') im wesentlichen mittig auf eine Öffnungsquerschnittsfläche (43) des Empfängers (8') fällt;
D) Festlegen der Relativlage zwischen dem ersten Teil (22) und der Lichtempfängereinheit (1') in der einjustierten Position;
E) Justage des zweiten Teils (23) gegenüber dem ersten Teil (22) durch Verschieben des zweiten Teils (23) in der zweiten Richtung (x) gegenüber dem ersten Teil (22), derart, daß eine vorgegebene Bedingung hinsichtlich der Lage der optischen Bildebene der Optik (12', 40) in bezug auf die vorgegebene Lage der Öffnungsqüerschnittsfläche (43) des Empfängers (8') erfüllt ist; und
F) Festlegen der Relativlage zwischen dem ersten Teil (22) und dem zweiten Teil (23) in der einjustierten Position.

3. Verfahren nach Anspruch 1 oder 2, bei dem die konstruktiv vorgegebene Bezugsebene (E_{xy}) senkrecht zu der ersten Richtung (z) orientiert ist.

4. Verfahren nach einem der vorhergehenden Ansprüche, bei dem die Optik (40) eine im Strahlengang zwischen dem Umlenkspiegel (26) und dem Lichtwellenleiter (21) angeordnete Linse (40) umfaßt.

5. Verfahren nach Anspruch 4, bei dem die Größe und Position der Linse (40) so gewählt sind, daß diese in der in dem ersten Justageschritt einjustierten Position dezentral von dem Strahlengang (37a, 37b) durchlaufen wird.

## Claims

1. Method of adjusting an optoelectronic component, having
- a light-emitter unit (1) which contains a light emitter (8) and emits a light beam (13) which runs along a first direction (z),
- an attachment unit (2) comprising a first part (22) and a second part (23), the first part (22) having a deflecting mirror (26) and the second part (23) being provided for securing an optical waveguide (21) and being capable of displacement, in relation to the first part (22), in the direction of the deflecting mirror (26) or away from the same, and
- an optical unit (12, 40) which is arranged in the beam path between the light emitter (8) and the second part (23),
in the case of which the following steps are carried out:
a) setting the light emitter (8) in operation;
b) setting an initial relative position between the first part (22) and the second part (23);
c) while maintaining the initial relative position, adjusting the first part (22) in relation to the light-emitter unit (1) by displacing the first part (22) in a reference plane (E_{xy}), which is predetermined by the design and intersects the first direction (z), such that the light beam (13) emitted falls on the deflecting mirror (26) and the deflected light beam (37, 37b) which leaves the latter is one which falls essentially centrally on an end surface (33) of the optical waveguide (21) in a second direction (x), which runs essentially parallel to the reference plane (E_{xy});
d) securing the first part (22) relative to the light-emitter unit (1) in the adjusted position;
e) adjusting the second part (23) in relation to the first part (22) by displacing the second part (23) in the second direction (x) in relation to the first part (22) so as to fulfil a predetermined condition in respect of the position of the optical image plane of the optical unit (12, 40) in relation to the position of the end surface (33) of the optical waveguide (21); and
f) securing the first part (22) relative to the second part (23) in the adjusted position.

2. Method of adjusting an optoelectronic component, having
- a light-receiver unit (1') which contains a light receiver (8') and receives a light beam (37') which runs along a first direction (z),
- an attachment unit (2) comprising a first part (22) and a second part (23), the first part (22) having a deflecting mirror (26) and the second part (23) being provided for securing an optical waveguide (21) and being capable of displacement, in relation to the first part (22), in the direction of the deflecting mirror (26) and away from the same, and
- an optical unit (12', 40) which is arranged in the beam path between the light receiver (8') and the second part (23),
in the case of which the following steps are carried out:
A1) setting in operation an external light emitter, which is coupled to the optical waveguide (21) at its free end, a light beam (13') which is emitted in a second direction (x) leaving the optical waveguide (21);
A2) setting the light receiver (8') in operation;
B) setting an initial relative position between the first part (22) and the second part (23);
C) while maintaining the initial relative position, adjusting the first part (22) in relation to the light-receiver unit (1') by displacing the first part in a reference plane (E_{xy}), which is predetermined by the design, intersects the first direction (z) and is essentially parallel to the second direction, such that the light beam (13') emitted falls on the deflecting mirror (26) and the deflected light beam (37'), which runs in the first direction (z), falls essentially centrally on an aperture cross-sectional surface area (43) of the receiver (8');
D) securing the first part (22) relative to the light-receiver unit (1') in the adjusted position;
E) adjusting the second part (23) in relation to the first part (22) by displacing the second part (23) in the second direction (x) in relation to the first part (22) so as to fulfil a predetermined condition in respect of the position of the optical image plane of the optical unit (12', 40) in relation to the predetermined position of the aperture cross-sectional surface area (43) of the receiver (8'); and
F) securing the first part (22) relative to the second part (23) in the adjusted position.

3. Method according to Claim 1 or 2, in the case of which the reference plane (E_{xy}), which is predetermined by the design, is oriented perpendicularly to the first direction (z).

4. Method according to one of the preceding claims, in the case of which the optical unit (40) comprises a lens (40) which is arranged in the beam path between the deflecting mirror (26) and the optical waveguide (21).

5. Method according to Claim 4, in the case of which the size and position of the lens (40) are selected such that, in the position adjusted in the first adjustment step, the lens has the beam path (37a, 37b) passing through it eccentrically.

## Revendications

1. Procédé de réglage d'un composant optoélectronique comprenant
- une unité (1) d'émission de lumière comportant un émetteur (8) de lumière et émettant un faisceau (13) lumineux s'étendant suivant une première direction (z),
- une unité (2) de connexion comprenant une première partie (22) et une deuxième partie (23), la première partie (22) ayant un miroir (26) de déviation et la deuxième partie (23) étant prévue pour le maintien d'une fibre optique (21) et pouvant être déplacée par rapport à la première partie (22) vers le miroir (26) de déviation ou en s'en écartant et
- une optique (12, 14) montée dans le trajet du faisceau entre l'émetteur (8) de lumière et la deuxième partie (23),
dans lequel on effectue les stades :
a) mise en fonctionnement de l'émetteur (8) de lumière ;
b) réglage d'une position relative de départ entre la première partie (22) et la deuxième partie (23) ;
c) tout en maintenant le réglage de la position relative de départ de la première partie (22) par rapport à l'unité (1) d'émission de lumière par déplacement de la première partie (22) dans un plan (E_{xy}) de référence prescrit par construction et coupant la première direction (z), de façon à ce que le faisceau (13) de lumière émis arrive sur le miroir (26) de déviation et qu'un faisceau (37, 37b) dévié de lumière le quitte et soit incident suivant une deuxième direction (x) qui est sensiblement parallèle au plan (E_{xy}) de référence sensiblement au milieu sur une surface (13) frontale de la fibre optique (21) ;
d) fixation de la position relative entre la première partie (22) et l'unité (1 ) d'émission de lumière en la position réglée ;
e) réglage de la deuxième partie (23) par rapport à la première partie (22) par déplacement de la deuxième partie (23) dans la deuxième direction (x) par rapport à la première partie (22), de façon à satisfaire à une condition donnée à l'avance du point de vue de la position du plan image optique de l'optique (12, 40) par rapport à la position de la surface (33) frontale de la fibre optique (21) ; et
f) fixation de la position relative entre la première partie (22) et la deuxième partie (23) en la position réglée.

2. Procédé de réglage d'un composant optoélectronique comprenant
- une unité (1') de réception de lumière contenant un récepteur (8') de lumière qui reçoit un faisceau (37') de lumière s'étendant le long d'une première direction (z),
- une unité (2) de connexion comprenant une première partie (22) et une deuxième partie (23), la première partie (22) ayant un miroir (26) de déviation et la deuxième partie (23) étant prévue pour le maintien d'une fibre optique (21) et pouvant être déplacée par rapport à la première partie (22) vers le miroir (26) de déviation ou en s'en écartant et
- une optique (12', 40) montée dans le trajet du faisceau entre le récepteur (8') de lumière et la deuxième partie (23),
dans lequel on effectue les stades :
A1) mise en fonctionnement d'un émetteur extérieur de lumière couplé à l'extrémité libre de la fibre optique (21) d'un faisceau (13') de lumière émis dans une deuxième direction (x) quittant la fibre optique (21) ;
A2) mise en fonctionnement du récepteur (8') de lumière ;
B) réglage d'une position relative de départ entre la première partie (22) et la deuxième partie (23) ;
C) tout en maintenant le réglage de la position relative de départ de la première partie (22) par rapport à l'unité (1) d'émission de lumière par déplacement de la première partie dans un plan (E_{xy}) de référence prescrit par construction coupant la première direction (z) et s'étendant sensiblement parallèlement à la deuxième direction, de façon à ce que le faisceau (13') de lumière émis arrive sur le miroir (26) de déviation et de façon à ce que le faisceau (37') de lumière dévié et s'étendant dans la première direction (z) soit incident sensiblement au milieu sur une surface (43) de section transversale d'ouverture du récepteur (8') ;
D) fixation de la position relative entre la première partie (22) et l'unité (1') de réception de la lumière en la position réglée ;
E) réglage de la deuxième partie (23) par rapport à la première partie (22) par déplacement de la deuxième partie (23) dans la deuxième direction (x) par rapport à la première partie (22), de façon à satisfaire à une condition donnée à l'avance du point de vue de la position du plan image optique de l'optique (12', 40) par rapport à la position donnée à l'avance de la surface (43) de section transversale d'ouverture du récepteur (8') ; et
F) fixation de la position relative entre la première partie (22) et la deuxième partie (23) en la position réglée.

3. Procédé suivant la revendication 1 ou 2, dans lequel le plan (E_{xy}) de référence prescrit par construction est perpendiculaire à la première direction (z).

4. Procédé suivant l'une des revendications précédentes, dans lequel
l'optique (40) comprend une lentille (40) montée dans le trajet du faisceau entre le miroir (26) de déviation et la fibre optique (21).

5. Procédé suivant la revendication 4, dans lequel
on choisit la dimension et la position de la lentille (40) de façon à ce que celle-ci soit en la position réglée dans le premier stade de réglage traversée de manière décentrée par le trajet (37a, 37b) du faisceau.
